# EUROPEAN PATENT SPECIFICATION

(11) **EP 4 378 781 B1**
(45) Date of publication and mention of the grant of the patent: **26.11.2025**
(21) Application number: 22851886.6
(22) Date of filing: 20.07.2022
(51) Int. Cl.: B60W 30/095

(54) **DRIVING BEHAVIOR DETERMINATION METHOD AND RELATED DEVICE THEREOF**
VERFAHREN ZUR BESTIMMUNG DES FAHRVERHALTENS UND ZUGEHÖRIGE VORRICHTUNG DAFÜR
PROCÉDÉ DE DÉTERMINATION DE COMPORTEMENT DE CONDUITE ET DISPOSITIF ASSOCIÉ CORRESPONDANT

(30) Priority: 31.07.2021 CN 202110877092
(43) Date of publication of application: 05.06.2024
(73) Proprietor: Huawei Technologies Co., Ltd., Longgang Shenzhen, Guangdong 518129 (CN)
(72) Inventor: WANG, Zhitao, Shenzhen, Guangdong 518129 (CN); LI, Wei, Shenzhen, Guangdong 518129 (CN); CHENG, Siyuan, Shenzhen, Guangdong 518129 (CN); CHEN, Yuying, Shenzhen, Guangdong 518129 (CN); CHE, Yuhan, Shenzhen, Guangdong 518129 (CN)
(74) Representative: Körber, Martin Hans
(86) International application number: PCT/CN2022/106622
(87) International publication number: WO 2023/011172

(56) References cited:
- CN-A- 112 577 506
- CN-A- 113 156 927
- CN-A- 113 635 896
- DE-A1- 102014 015 463
- DE-A1- 102017 118 651
- US-A1- 2018 032 082
- US-A1- 2019 061 748
- US-A1- 2019 152 490
- US-A1- 2020 231 149
- US-A1- 2021 122 373

## Description

### TECHNICAL FIELD

This application relates to the field of autonomous driving technologies, and in particular, to a driving behavior determining method and a related device thereof.

### BACKGROUND

With rapid development of autonomous driving technologies, more enterprises are developing or mass producing driving systems that control a vehicle to be self-driving on an actual lane, so that the vehicle on which the driving system is installed has an autonomous driving function without human intervention.

A current autonomous driving solution is usually implemented based on a neural network model. For ease of description, the following uses a first vehicle and a second vehicle for description. In a driving process of the first vehicle, if the second vehicle appears around the first vehicle, the first vehicle may obtain first driving data of the first vehicle and second driving data of the second vehicle, and process the first driving data and the second driving data by using a trained target model, to obtain a driving behavior to be performed by the first vehicle.

In a training process, the target model may learn a feature of human driving data. Therefore, the driving behavior that is to be performed by the first vehicle and that is obtained by using the target model may be human-like to some extent, but safety is usually ignored. Consequently, the first vehicle has a potential risk in an autonomous driving process.

US 2018/032082 Al discloses measures for navigating an autonomous vehicle using reinforcement learning techniques. In one implementation, a navigation system for a host vehicle may include at least one processing device programmed to: receive, from a camera, a plurality of images representative of an environment of the host vehicle; analyze the plurality of images to identify a navigational state associated with the host vehicle; provide the navigational state to a trained navigational system; receive, from the trained navigational system, a desired navigational action for execution by the host vehicle in response to the identified navigational state; analyze the desired navigational action relative to one or more predefined navigational constraints; determine an actual navigational action for the host vehicle, wherein the actual navigational action includes at least one modification of the desired navigational action determined based on the one or more predefined navigational constraints; and cause at least one adjustment of a navigational actuator of the host vehicle in response to the determined actual navigational action for the host vehicle.

US 2019/152490 Al discloses measures for determining object motion and controlling autonomous vehicles. The operations include obtaining data associated with a first object and one or more second objects within a surrounding environment of an autonomous vehicle. The operations include determining an interaction between the first object and the one or more second objects based at least in part on the data. The operations include determining one or more predicted trajectories of the first object within the surrounding environment based at least in part on the interaction between the first object and the one or more second objects. The operations include outputting data indicative of the one or more predicted trajectories of the first object.

### SUMMARY

Embodiments of this invention provide a driving behavior determining method and a related device thereof, to avoid a potential risk of autonomous driving and improve a safety level of autonomous driving.

A first aspect of embodiments of this invention provides a driving behavior determining method, and the method includes the following steps.

In a driving process of a first vehicle, the first vehicle collects first driving data of the first vehicle and second driving data of a second vehicle by using various sensors installed on the first vehicle.

After obtaining the first driving data and the second driving data, the first vehicle performs derivation based on the first driving data and the second driving data, to obtain a driving behavior set in which the first vehicle has no risk of collision with the second vehicle. It may be understood that the driving behavior set includes at least one driving behavior in which the first vehicle has no risk of collision with the second vehicle, that is, a driving behavior with specific safety. For example, the driving behavior set includes two driving behaviors: overtaking and yielding. To be specific, if the first vehicle performs overtaking or yielding, neither the first vehicle nor the second vehicle collides with each other.

Then, the first vehicle inputs the first driving data and the second driving data into a target model (that is, a neural network model that has been trained), to process the first driving data and the second driving data by using the target model, to obtain a predicted driving behavior of the first vehicle.

If the driving behavior set includes the predicted driving behavior, the first vehicle determines that the predicted driving behavior obtained by using the target model is a safe driving behavior. Therefore, the first vehicle determines the predicted driving behavior as a driving behavior to be performed by the first vehicle during actual driving.

It can be learned from the foregoing method that after obtaining the first driving data of the first vehicle and the second driving data of the second vehicle, the first vehicle obtains the driving behavior set based on the first driving data and the second driving data. Then, the first vehicle processes the first driving data and the second driving data by using the target model, to obtain the predicted driving behavior of the first vehicle. The driving behavior set is a set of driving behaviors in which the first vehicle has no risk of collision with the second vehicle. If the driving behavior set includes the predicted driving behavior, the first vehicle determines that the predicted driving behavior is a safe driving behavior, and therefore determines the predicted driving behavior as the driving behavior to be performed by the first vehicle during actual autonomous driving. In this way, all driving behaviors performed by the first vehicle in the autonomous driving process are driving behaviors with specific safety. This can avoid a potential risk of autonomous driving, and improve a safety level of autonomous driving.

In a possible implementation, the method further includes: if the driving behavior set does not include the predicted driving behavior, determining, from the driving behavior set, the driving behavior to be performed by the first vehicle. In the foregoing implementation, if the driving behavior set does not include the predicted driving behavior, the first vehicle determines that the predicted driving behavior is an unsafe driving behavior, and does not use the predicted driving behavior obtained by using the target model, and determines, from the driving behavior set, the driving behavior to be performed by the first vehicle, to further avoid a potential risk of autonomous driving and improve a safety level of autonomous driving.

In a possible implementation, the target model is obtained through training based on third driving data. The processing the first driving data and the second driving data by using the target model, to obtain a predicted driving behavior of the first vehicle includes: if the first driving data and the second driving data fall within a preset value range, processing the first driving data and the second driving data by using the target model, to obtain the predicted driving behavior of the first vehicle. The preset value range is constructed based on the third driving data. In the foregoing implementation, the first vehicle may further determine, by using an anomaly detection model, whether both the first driving data and the second driving data fall within the preset value range, to determine whether both the first driving data and the second driving data are normal data. If the anomaly detection model determines that both the first driving data and the second driving data fall within the preset value range, the first vehicle may consider that both the first driving data and the second driving data are normal data, and therefore process the first driving data and the second driving data by using the target model, to obtain the predicted driving behavior of the first vehicle. In this way, it can be ensured that the target model correctly generalizes the normal data.

In a possible implementation, the method further includes: if the first driving data and/or the second driving data fall/falls outside the preset value range, determining, from the driving behavior set, the driving behavior to be performed by the first vehicle. In the foregoing implementation, if the anomaly detection model determines that the first driving data and/or the second driving data fall/falls outside the preset value range, the first vehicle considers that the first driving data and/or the second driving data are/is abnormal data. Therefore, the first vehicle does not continue to process the data by using the target model. Instead, the driving behavior to be performed by the first vehicle is determined from the driving behavior set. In this way, it can be avoided that the target model incorrectly generalizes the abnormal data.

In a possible implementation, the processing the first driving data and the second driving data by using the target model, to obtain a predicted driving behavior of the first vehicle includes: The first vehicle first processes the first driving data and the second driving data by using the target model, to obtain distribution probabilities of a plurality of candidate driving behaviors. Then, the first vehicle determines, from the plurality of candidate driving behaviors, a candidate driving behavior with a largest distribution probability as a target driving behavior. Finally, if a distribution probability of the target driving behavior meets a preset condition, the target driving behavior is determined as the predicted driving behavior of the first vehicle. In the foregoing implementation, after the first vehicle obtains the plurality of candidate driving behaviors predicted by the target model, if the distribution probability of the target driving behavior in the plurality of candidate driving behaviors meets the preset condition, the first vehicle may determine that prediction of the target model is trustworthy. Therefore, the target driving behavior may be used as the predicted driving behavior of the first vehicle, and the predicted driving behavior is used in a subsequent step. In this way, reliability of the target model can be improved, and implementation of a decision-making system based on the target model is facilitated.

In a possible implementation, the method further includes: if the distribution probability of the target driving behavior does not meet the condition, determining, from the driving behavior set, the driving behavior to be performed by the first vehicle. In the foregoing implementation, if the distribution probability of the target driving behavior does not meet the preset condition, the first vehicle may determine that prediction of the target model is untrustworthy, abandon the target driving behavior obtained by using the target model, and determine, from the driving behavior set, the driving behavior to be performed by the first vehicle. In this way, reliability of the target model can be further improved, and implementation of a decision-making system based on the target model is facilitated.

In a possible implementation, the method further includes: obtaining, based on the first driving data and the second driving data, a score of the at least one candidate driving behavior included in the driving behavior set; and the determining, from the driving behavior set, the driving behavior to be performed by the first vehicle includes: determining, from the driving behavior set, a candidate driving behavior with a highest score as the driving behavior to be performed by the first vehicle. In the foregoing implementation, the first vehicle further records a score of each candidate driving action in the driving behavior set. When the first vehicle needs to select, from the driving behavior set, a driving behavior to be performed during actual driving, the first vehicle may determine, from the driving behavior set, the candidate driving behavior with a highest score as the driving behavior to be performed during actual driving.

In a possible implementation, the condition is that the distribution probability of the target driving behavior is greater than or equal to a preset first threshold, or a variance determined based on the distribution probability of the target driving behavior is less than or equal to a preset second threshold.

In a possible implementation, the driving behavior set includes at least one of the plurality of candidate driving behaviors obtained by using the target model.

A second aspect of embodiments of this invention provides a driving behavior determining apparatus. The apparatus includes: a first obtaining module, configured to obtain first driving data of a first vehicle and second driving data of a second vehicle; a second obtaining module, configured to obtain, based on the first driving data and the second driving data, a driving behavior set in which the first vehicle has no risk of collision with the second vehicle; a processing module, configured to process the first driving data and the second driving data by using a target model, to obtain a predicted driving behavior of the first vehicle; and a first determining module, configured to: if the driving behavior set includes the predicted driving behavior, determine the predicted driving behavior as a driving behavior to be performed by the first vehicle.

It can be learned from the foregoing apparatus that after obtaining the first driving data of the first vehicle and the second driving data of the second vehicle, the first vehicle obtains the driving behavior set based on the first driving data and the second driving data. Then, the first vehicle processes the first driving data and the second driving data by using the target model, to obtain the predicted driving behavior of the first vehicle. The driving behavior set is a set of driving behaviors in which the first vehicle has no risk of collision with the second vehicle. If the driving behavior set includes the predicted driving behavior, the first vehicle determines that the predicted driving behavior is a safe driving behavior, and therefore determines the predicted driving behavior as the driving behavior to be performed by the first vehicle during actual autonomous driving. In this way, all driving behaviors performed by the first vehicle in the autonomous driving process are driving behaviors with specific safety. This can avoid a potential risk of autonomous driving, and improve a safety level of autonomous driving.

In a possible implementation, the apparatus further includes: a second determining module, configured to: if the driving behavior set does not include the predicted driving behavior, determine, from the driving behavior set, the driving behavior to be performed by the first vehicle.

In a possible implementation, the target model is obtained through training based on third driving data, and the processing module is configured to: if the first driving data and the second driving data fall within a preset value range, process the first driving data and the second driving data by using the target model, to obtain the predicted driving behavior of the first vehicle. The preset value range is constructed based on the third driving data.

In a possible implementation, the apparatus further includes: a third determining module, configured to: if the first driving data and/or the second driving data fall/falls outside the preset value range, determine, from the driving behavior set, the driving behavior to be performed by the first vehicle.

In a possible implementation, the processing module is configured to: process the first driving data and the second driving data by using the target model, to obtain distribution probabilities of a plurality of candidate driving behaviors; and if a distribution probability of a target driving behavior in the plurality of candidate driving behaviors meets a preset condition, determine the target driving behavior as the predicted driving behavior of the first vehicle. The distribution probability of the target driving behavior is the largest in the distribution probabilities of the plurality of candidate driving behaviors.

In a possible implementation, the apparatus further includes: a fourth determining module, configured to: if the distribution probability of the target driving behavior does not meet the condition, determine, from the driving behavior set, the driving behavior to be performed by the first vehicle.

In a possible implementation, the condition is that the distribution probability of the target driving behavior is greater than or equal to a preset first threshold, or a variance determined based on the distribution probability of the target driving behavior is less than or equal to a preset second threshold.

In a possible implementation, the driving behavior set includes at least one of the plurality of candidate driving behaviors.

In a possible implementation, the second obtaining module is further configured to obtain, based on the first driving data and the second driving data, a score of the at least one candidate driving behavior included in the driving behavior set; and the second determining module, the third determining module, or the fourth determining module is configured to determine, from the driving behavior set, a candidate driving behavior with a highest score as the driving behavior to be performed by the first vehicle.

A third aspect of embodiments of this invention provides a driving behavior determining apparatus. The driving behavior determining apparatus includes a memory and a processor. The memory stores code, the processor is configured to execute the code, and when the code is executed, the driving behavior determining apparatus performs the method according to any one of the first aspect or the possible implementations of the first aspect.

### (excised)

A fifth aspect of embodiments of this invention provides a computer storage medium. The computer storage medium stores one or more instructions. When the instructions are executed by one or more computers, the one or more computers are enabled to perform the method according to any one of the first aspect or the possible implementations of the first aspect.

A sixth aspect of embodiments of this invention provides a computer program product. The computer program product stores instructions. When the instructions are executed by a computer, the computer is enabled to perform the method according to any one of the first aspect or the possible implementations of the first aspect.

In this embodiment of this invention, after obtaining first driving data of a first vehicle and second driving data of a second vehicle, the first vehicle obtain a driving behavior set based on the first driving data and the second driving data. Then, the first vehicle processes the first driving data and the second driving data by using the target model, to obtain a predicted driving behavior of the first vehicle. The driving behavior set is a set of driving behaviors in which the first vehicle has no risk of collision with the second vehicle. If the driving behavior set includes the predicted driving behavior, the first vehicle determines that the predicted driving behavior is a safe driving behavior, and therefore determines the predicted driving behavior as a driving behavior to be performed by the first vehicle during actual autonomous driving. In this way, all driving behaviors performed by the first vehicle in the autonomous driving process are driving behaviors with specific safety. This can avoid a potential risk of autonomous driving, and improve a safety level of autonomous driving.

### BRIEF DESCRIPTION OF DRAWINGS

FIG. 1A and FIG. 1B are a schematic diagram of a driving behavior determining method according to an embodiment of this invention;
FIG. 2 is a schematic diagram of derivation based on driving data according to an embodiment of this invention;
FIG. 3 is a schematic diagram of a model training method according to an embodiment of this invention;
FIG. 4 is a schematic diagram of a structure of a first to-be-trained model according to an embodiment of this invention;
FIG. 5 is a schematic diagram of a value range according to an embodiment of this invention;
FIG. 6 is a schematic diagram of a structure of a driving behavior determining apparatus according to an embodiment of this invention;
FIG. 7 is a schematic diagram of a structure of a model training apparatus according to an embodiment of this invention;
FIG. 8 is a schematic diagram of a structure of an execution device according to an embodiment of this invention;
FIG. 9 is a schematic diagram of a structure of a training device according to an embodiment of this invention; and
FIG. 10 is a schematic diagram of a structure of a chip according to an embodiment of this invention.

### DESCRIPTION OF EMBODIMENTS

Embodiments of this application provide a driving behavior determining method and a related device thereof, to avoid a potential risk of autonomous driving and improve a safety level of autonomous driving.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants mean to cover a non-exclusive inclusion, so that a process, method, system, product, or device that includes a series of units is not necessarily limited to those units, but may include another unit not clearly listed or inherent to such a process, method, product, or device.

Implementation of an artificial intelligence (AI) technology: The AI technology is a technical discipline that uses digital computers or machines controlled by digital computers to simulate, extends, and expands human intelligence, and the AI technology perceives an environment, obtains knowledge, and uses the knowledge to obtain an optimal result. In other words, artificial intelligence technology is a branch of computer science, and is intended to understand essence of intelligence and produce a new intelligent machine that can react in a manner similar to human intelligence. Implementing autonomous driving by using artificial intelligence is a common application manner of artificial intelligence.

A current autonomous driving solution may be implemented based on a neural network model in the AI technology. For ease of description, the following uses a first vehicle and a second vehicle for description. In a driving process of the first vehicle, if the second vehicle appears around the first vehicle, the first vehicle may obtain first driving data of the first vehicle and second driving data of the second vehicle, and process the first driving data and the second driving data by using a trained target model, to obtain a driving behavior to be performed by the first vehicle (for example, the first vehicle overtakes the second vehicle, or the first vehicle yields to the second vehicle). In this case, the first vehicle may perform the driving behavior, to implement autonomous driving.

In the conventional technology, the target model may learn a feature of human driving data in a training process. Therefore, the driving behavior that is to be performed by the first vehicle and that is obtained by using the target model may be human-like to some extent, but safety is usually ignored. Consequently, the first vehicle has a potential risk in an autonomous driving process.

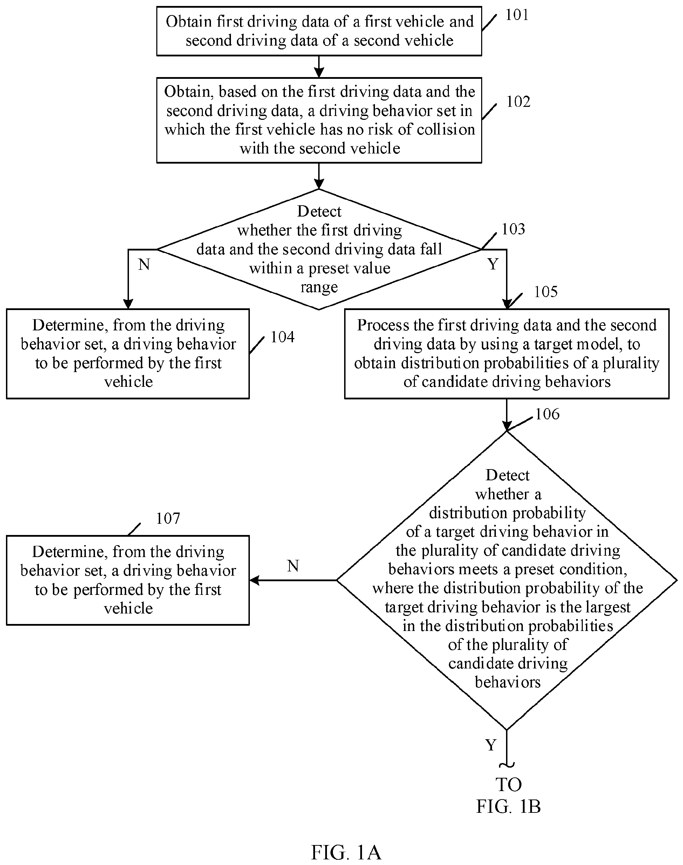

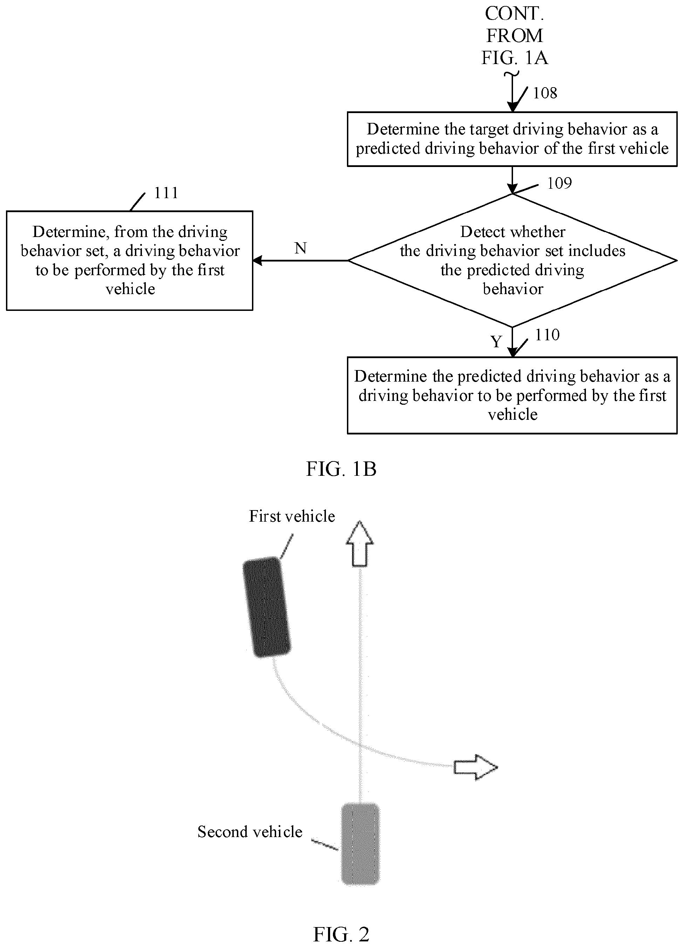

To resolve the foregoing problem, an embodiment of this application provides a driving behavior determining method. The method may be implemented by using a trained neural network model (that is, the target model provided in embodiments of this application) and a trained anomaly detection model. FIG. 1A and FIG. 1B are a schematic diagram of a driving behavior determining method according to an embodiment of this application. As shown in FIG. 1A and FIG. 1B, the method may be implemented by a driving system of a first vehicle (an execution body of the method is referred to as a first vehicle for short below). The method includes the following steps.

101: Obtain first driving data of the first vehicle and second driving data of a second vehicle.

In a driving process of the first vehicle, the first vehicle may collect, by using various sensors (for example, a camera and a radar) installed on the first vehicle, the first driving data of the first vehicle and the second driving data of the second vehicle located around the first vehicle. The first driving data may include data such as a speed of the first vehicle, a location of the first vehicle, driving duration of the first vehicle, and a driving direction of the first vehicle. The second driving data may include data such as a speed of the second vehicle, a location of the second vehicle, driving duration of the second vehicle, and a driving direction of the second vehicle.

102: Obtain, based on the first driving data and the second driving data, a driving behavior set in which the first vehicle has no risk of collision with the second vehicle.

After obtaining the first driving data and the second driving data, the first vehicle may obtain, based on the first driving data and the second driving data, the driving behavior set in which the first vehicle has no risk of collision with the second vehicle. Specifically, the first vehicle may perform derivation based on the first driving data and the second driving data, to determine whether the first vehicle in various driving behaviors has a risk of collision with the second vehicle.

For ease of understanding the foregoing derivation process, the following further describes the process with reference to FIG. 2. As shown in FIG. 2 (FIG. 2 is a schematic diagram of derivation based on driving data according to an embodiment of this application), the first vehicle may first determine, based on driving data of the first vehicle, that a current driving state of the first vehicle is to prepare to turn left at a location at a speed. Similarly, the first vehicle may determine, based on driving data of the second vehicle, that a current driving state of the second vehicle is to go straight at a location at a speed. Then, the first vehicle may assume different accelerations for the first vehicle and the second vehicle, so that the first vehicle and the second vehicle perform simulated driving based on the current driving states and the specified accelerations, to derive whether the first vehicle and the second vehicle collide. A derivation result is shown in Table 1.

**Table 1**

| Acceleration (m/s^2) | -4 | -3 | -2 | -1 | 0 | 1 | 2 | 3 |
|---|---|---|---|---|---|---|---|---|
| -4 | -1 | -1 | -1 | -1 | -1 | -1 | 0 | 1 |
| -3 | -1 | -1 | -1 | -1 | -1 | -1 | -1 | 0 |
| -2 | -1 | -1 | -1 | -1 | -1 | -1 | -1 | -1 |
| -1 | -1 | -1 | -1 | -1 | -1 | -1 | -1 | -1 |
| 0 | 0 | -1 | -1 | -1 | -1 | -1 | -1 | -1 |
| 1 | 1 | 0 | 0 | -1 | -1 | -1 | -1 | -1 |
| 2 | 2 | 1 | 1 | 0 | -1 | -1 | -1 | -1 |
| 3 | 3 | 2 | 1 | 1 | 0 | -1 | -1 | -1 |

In Table 1, the first row is an assumed acceleration of the first vehicle, the first column is an assumed acceleration of the second vehicle, and other columns and other rows are scores. A score of -1 indicates that there is a collision risk, and a score greater than -1 indicates that there is no collision risk (generally, when the score is greater than -1, a higher score indicates a lower risk). For example, a score of the second row and the second column is -1, indicating that the first vehicle performs simulated driving at an acceleration of -4 m/s^2 (that is, a driving behavior performed by the first vehicle in a derivation process is yielding), and the second vehicle performs simulated driving at an acceleration of -4 m/s^2 (that is, a driving behavior performed by the second vehicle in a derivation process is yielding). In this case, the first vehicle may collide with the second vehicle, that is, the driving behavior of the first vehicle has a collision risk to the second vehicle, and a score of the driving behavior of the first vehicle is -1. For another example, a score of the second row and the eighth column is 0, indicating that the first vehicle performs simulated driving at an acceleration of 2 m/s^2 (that is, a driving behavior performed by the first vehicle in a derivation process may be overtaking), and the second vehicle performs simulated driving at an acceleration of -4 m/s^2 (that is, a driving behavior performed by the second vehicle in a derivation process is yielding). In this case, the first vehicle may not collide with the second vehicle, that is, the driving behavior of the first vehicle has no collision risk to the second vehicle, and a score of the driving behavior of the first vehicle is 0. For another example, a score of the ninth row and the second column is 3, indicating that the first vehicle performs simulated driving at an acceleration of -4 m/s^2 (that is, a driving behavior performed by the first vehicle in a derivation process may be yielding), and the second vehicle performs simulated driving at an acceleration of 3 m/s^2 (that is, a driving behavior performed by the second vehicle in a derivation process is overtaking). In this case, the first vehicle may not collide with the second vehicle, that is, the driving behavior of the first vehicle has no collision risk to the second vehicle, and a score of the driving behavior of the first vehicle is 3.

It can be learned that if the first vehicle performs yielding and overtaking, neither the first vehicle nor the second vehicle may collide with each other. Therefore, the first vehicle may consider both yielding and overtaking as candidate driving behaviors. Therefore, the first vehicle may put these candidate driving behaviors into the driving behavior set in which the first vehicle has no risk of collision with the second vehicle, and record a score of each candidate driving behavior in the driving behavior set (for example, the first vehicle records a score of yielding as 3, and records a score of overtaking as 1).

It should be understood that, in the foregoing example, only two candidate driving behaviors, namely, yielding and overtaking, included in the driving behavior set are used as an example for description. In Table 1, when the first vehicle performs simulated driving at an acceleration of 1 m/s^2, 2 m/s^2, or 3 m/s^2, a score is -1. It indicates that once the first vehicle performs overtaking, the first vehicle may collide with the second vehicle. Therefore, the first vehicle considers only yielding as a candidate driving behavior, the driving behavior set in which the first vehicle has no risk of collision with the second vehicle includes only one candidate driving behavior.

It should be further understood that, in the foregoing example, that a score of a candidate driving behavior recorded by the first vehicle is the highest score of the candidate driving behavior is merely used as an example for description. The score of the candidate driving behavior recorded by the first vehicle may also be an average score of the candidate driving behavior (for example, as shown in Table 1, the first vehicle may record a score of yielding as (0×6+1×6+2×3+3×1)/16=0.9, and record a score of overtaking as (0×2+1×1)/3=0.3) and the like.

It should be further understood that, in the foregoing example, only a vehicle overtaking/yielding scenario is used as an example for description, and this does not constitute a limitation on the driving scenario in this application. In the vehicle overtaking/yielding scenario, the first vehicle has two types of driving behaviors: overtaking and yielding. Therefore, the driving behavior set includes at least one candidate driving behavior, and includes at most two candidate driving behaviors. In another scenario, the first vehicle may have more types of driving behaviors. Therefore, the driving behavior set may include more candidate driving behaviors. For example, in the overtaking scenario, the first vehicle has three types of driving behaviors: accelerating, keeping the original speed, and decelerating. Therefore, the driving behavior set includes at least one candidate driving behavior, and at most three candidate driving behaviors.

103: Detect whether the first driving data and the second driving data fall within a preset value range.

After obtaining the driving behavior set, the first vehicle may detect whether the first driving data and the second driving data fall within the preset value range. The preset value range is constructed based on third driving data, and the third driving data is data used to train the target model. For a description of the target model, refer to a related description part in step 105. Details are not described herein.

Specifically, the first vehicle may first obtain an anomaly detection model, and the anomaly detection model may be constructed based on some anomaly detection algorithms, for example, an isolation forest algorithm. A value range is preset in the anomaly detection model, and the preset value range is a value range constructed for the third driving data. If the anomaly detection model determines that the driving data falls within the value range, it may be considered that the driving data is normal data. If the anomaly detection model determines that the driving data falls outside the value range, it may be considered that the driving data is abnormal data. In this case, the first vehicle may input the first driving data and the second driving data into the anomaly detection model, to determine, by using the anomaly detection model, whether both the first driving data and the second driving data fall within the preset value range, to determine whether the first driving data and the second driving data are normal data.

104: If the first driving data and/or the second driving data fall/falls outside the preset value range, determine, from the driving behavior set, the driving behavior to be performed by the first vehicle.

If the anomaly detection model determines that the first driving data and/or the second driving data fall/falls outside the preset value range, the first vehicle considers the first driving data and/or the second driving data as abnormal data. Therefore, the first vehicle may select a candidate driving action from the driving behavior set, and determine the action as the driving behavior to be performed by the first vehicle during actual driving. Specifically, the first vehicle may select, in a plurality of manners, the driving behavior to be performed by the first vehicle during actual driving. The manners are separately described below.

In a possible implementation, if the driving behavior set includes only one candidate driving action, the first vehicle directly determines the candidate driving action as a driving behavior to be performed by the first vehicle during actual driving. For example, it is assumed that the driving behavior set includes only yielding, and the first vehicle may directly determine that a driving behavior to be performed by the first vehicle during actual driving is yielding.

In another possible implementation, if the driving behavior set includes only a plurality of candidate driving actions, because the first vehicle records a score of each candidate driving action in the driving behavior set, the first vehicle may determine, in the driving behavior set, a candidate driving behavior with a highest score as the driving behavior to be performed by the first vehicle during actual driving. For example, it is assumed that the driving behavior set includes yielding and overtaking. Because a score of yielding recorded by the first vehicle is 0.9, and a score of overtaking recorded by the first vehicle is 0.3, the first vehicle may determine that a driving behavior to be performed by the first vehicle during actual driving is yielding.

105: If the first driving data and the second driving data fall within the preset value range, process the first driving data and the second driving data by using the target model, to obtain distribution probabilities of a plurality of candidate driving behaviors.

106: Detect whether a distribution probability of a target driving behavior in the plurality of candidate driving behaviors meets a preset condition, where the distribution probability of the target driving behavior is the largest in the distribution probabilities of the plurality of candidate driving behaviors.

If the anomaly detection model determines that both the first driving data and the second driving data fall within the preset value range, the first vehicle considers that both the first driving data and the second driving data are normal data. Therefore, the first vehicle may process the first driving data and the second driving data by using the target model, to obtain a predicted driving behavior of the first vehicle.

Specifically, the first vehicle may first obtain the target model. The target model learns human driving experience, and therefore may be used to estimate a driving behavior of the vehicle based on driving data of the vehicle. Then, the first vehicle may input the first driving data and the second driving data into the target model, to process the first driving data and the second driving data by using the target model, and obtain a distribution probability of each of the plurality of candidate driving behaviors.

It should be noted that the target model includes M submodels that are independent of each other, and the first vehicle may input the first driving data and the second driving data into each submodel, to obtain a prediction result output by each submodel. Some of the M prediction results may be a same candidate driving behavior. Therefore, the first vehicle may calculate a ratio of a quantity of these prediction results to a quantity of all prediction results, and use the ratio as a distribution probability of the candidate driving behavior. For example, in a vehicle overtaking/yielding scenario, after the first vehicle inputs the first driving data and the second driving data into the M submodels, prediction results of P submodels are yielding, and prediction results of K submodels are overtaking, P+K=M, P≥0, and K≥0. In this case, the first vehicle may calculate that a distribution probability of yielding is P/M, and a distribution probability of overtaking is K/M.

After the distribution probability of each candidate driving behavior is obtained, the first vehicle may use a candidate driving behavior with a largest distribution probability as the target driving behavior, and detect whether the distribution probability of the target driving behavior meets the preset condition, to determine whether prediction of the target model is trustworthy. For example, it is assumed that P/M=0.8 and K/M=0.2, and the first vehicle detects whether the distribution probability (0.8) of yielding meets the preset condition. The first vehicle may detect, in a plurality of manners, whether the distribution probability of the target driving behavior meets the preset condition. The manners are separately described below.

In a possible implementation, the first vehicle may detect whether the distribution probability of the target driving behavior is greater than or equal to a preset first threshold. If the distribution probability of the target driving behavior is greater than or equal to the first threshold (a value of the first threshold may be set based on an actual requirement, and is not limited herein), the first vehicle considers that prediction of the target model is trustworthy, and therefore performs step 108. If the distribution probability of the target driving behavior is less than the first threshold, the first vehicle considers that prediction of the target model is untrustworthy, and therefore performs step 107.

In another possible implementation, the first vehicle calculates a variance of the target driving behavior based on the distribution probability of the target driving behavior, and detects whether the variance is less than or equal to a preset second threshold (a value of the second threshold may be set based on an actual requirement, and is not limited herein). If the variance is less than or equal to the second threshold, the first vehicle considers that prediction of the target model is trustworthy, and therefore performs step 108. If the variance is greater than the second threshold, the first vehicle considers that prediction of the target model is untrustworthy, and therefore performs step 107.

It should be understood that the driving behavior in the driving behavior set is usually at least one of the plurality of candidate driving behaviors obtained by using the target model. For example, in a vehicle overtaking/yielding scenario, the target model may obtain two candidate driving behaviors: yielding and overtaking, and the driving behavior set may include at least one candidate driving behavior of yielding and overtaking. For another example, in the overtaking scenario, the target model may obtain three candidate driving behaviors: accelerating, keeping the original speed, and decelerating, and the driving behavior set may include at least one candidate driving behavior of accelerating, keeping the original speed, and decelerating, and the like.

107: If the distribution probability of the target driving behavior does not meet the condition, determine, from the driving behavior set, the driving behavior to be performed by the first vehicle.

If the distribution probability of the target driving behavior does not meet the preset condition, the first vehicle considers that prediction of the target model is untrustworthy. Therefore, the first vehicle determines, from the driving behavior set, the driving behavior to be performed by the first vehicle. For a description of determining, by the first vehicle from the driving behavior set, the driving behavior to be performed by the first vehicle, refer to the related description part in step 104. Details are not described herein again.

108: If a distribution probability of the target driving behavior meets a preset condition, determine the target driving behavior as the predicted driving behavior of the first vehicle.

If the distribution probability of the target driving behavior meets the preset condition, the first vehicle considers that prediction of the target model is trustworthy. Therefore, the first vehicle determines the target driving behavior as the predicted driving behavior of the first vehicle. For example, it is assumed that the first threshold is 0.7. Because the distribution probability of yielding is (0.8) greater than the first threshold (0.7), the first vehicle determines that yielding is the predicted driving behavior of the first vehicle.

109: Detect whether the driving behavior set includes the predicted driving behavior.

After obtaining the predicted driving behavior of the first vehicle, the first vehicle may detect whether the driving behavior set includes the predicted driving behavior, to determine whether the predicted driving behavior is a safe driving behavior.

110: If the driving behavior set includes the predicted driving behavior, determine the predicted driving behavior as the driving behavior to be performed by the first vehicle.

If the driving behavior set includes the predicted driving behavior, the first vehicle determines that the predicted driving behavior is a safe driving behavior. Therefore, the first vehicle may determine the predicted driving behavior as the driving behavior to be performed by the first vehicle during actual driving. For example, it is assumed that the driving behavior set includes yielding and overtaking. Because the predicted driving behavior of the first vehicle is yielding, the first vehicle may determine that the driving behavior to be performed by the first vehicle during actual driving is yielding.

111: If the driving behavior set does not include the predicted driving behavior, determine, from the driving behavior set, the driving behavior to be performed by the first vehicle.

If the driving behavior set includes the predicted driving behavior, the first vehicle determines that the predicted driving behavior is an unsafe driving behavior. Therefore, the first vehicle may determine, from the driving behavior set, the driving behavior to be performed by the first vehicle. For example, it is assumed that the driving behavior set includes only overtaking. Because the predicted driving behavior of the first vehicle is yielding, the first vehicle may determine that the driving behavior to be performed by the first vehicle during actual driving is overtaking.

In this embodiment of this application, after obtaining the first driving data of the first vehicle and the second driving data of the second vehicle, the first vehicle may obtain the driving behavior set based on the first driving data and the second driving data. Then, the first vehicle processes the first driving data and the second driving data by using the target model, to obtain the predicted driving behavior of the first vehicle. The driving behavior set is a set of driving behaviors in which the first vehicle has no risk of collision with the second vehicle. If the driving behavior set includes the predicted driving behavior, the first vehicle may determine that the predicted driving behavior is a safe driving behavior, and therefore determines the predicted driving behavior as a driving behavior to be performed by the first vehicle during actual autonomous driving. In this way, all driving behaviors performed by the first vehicle in the autonomous driving process are driving behaviors with specific safety. This can avoid a potential risk of autonomous driving, and improve a safety level of autonomous driving.

Further, the first vehicle may further determine, by using the anomaly detection model, whether the driving data is abnormal. If the driving data is abnormal data, the first vehicle does not continue to process the driving data by using the neural network model (the target model), to avoid that the neural network model incorrectly generalizes the abnormal data.

Further, after obtaining the candidate driving behavior predicted by the neural network model, the first vehicle may determine whether the distribution probability of the candidate driving behaviors meet the preset condition, to determine whether prediction of the neural network model is trustworthy. This can improve reliability of the neural network model, and facilitate implementation of a decision-making system based on the neural network model.

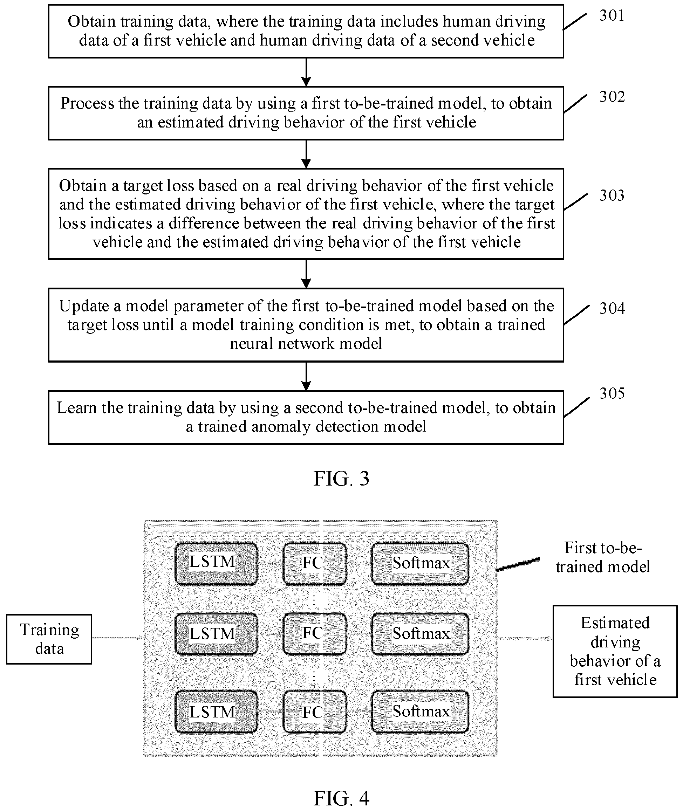

The foregoing describes in detail the driving behavior determining method provided in embodiments of this application. The following describes a model training method provided in embodiments of this application. FIG. 3 is a schematic diagram of a model training method according to an embodiment of this application. The method may be performed by a first vehicle, or may be performed by a training device (for example, a remote server) outside the first vehicle. After the training device obtains a trained neural network model and a trained anomaly detection model, these models are then deployed in the first vehicle. As shown in FIG. 3, the method includes the following steps.

301: Obtain training data, where the training data includes human driving data of the first vehicle and human driving data of a second vehicle.

When a first to-be-trained model and a second to-be-trained model need to be trained, a batch of training data may be obtained. The batch of training data includes a plurality of training data pairs, and each training data pair includes human driving data of one first vehicle and human driving data of one second vehicle. For any training data pair, the training data pair is marked with a real driving behavior to be performed by the first vehicle during actual driving. For example, for a training data pair, a real driving behavior that is to be performed by the first vehicle during actual driving and that is marked by the training data pair is that the first vehicle is to overtake the second vehicle.

It should be noted that the first to-be-trained model is a to-be-trained neural network model, and the second to-be-trained model is a to-be-trained anomaly detection model. Specifically, the first to-be-trained model may include M to-be-trained submodels, and structures of the M submodels are usually the same. As shown in FIG. 4 (FIG. 4 is a schematic diagram of a structure of the first to-be-trained model according to an embodiment of this application), each submodel may include a long short-term memory (L STM) network layer, a fully connected (FC) layer, a softmax function layer, and the like. The second to-be-trained model may be an original isolation forest model, or may be another original anomaly detection model. This is not limited herein.

302: Process the training data by using the first to-be-trained model, to obtain an estimated driving behavior of the first vehicle.

303: Obtain a target loss based on the real driving behavior of the first vehicle and the estimated driving behavior of the first vehicle, where the target loss indicates a difference between the real driving behavior of the first vehicle and the estimated driving behavior of the first vehicle.

304: Update a model parameter of the first to-be-trained model based on the target loss until a model training condition is met, to obtain the trained neural network model.

After the batch of training data is obtained, for any to-be-trained submodel, the batch of training data may be input into the submodel, to process each training data pair by using the submodel, and obtain an estimated driving behavior that is of the first vehicle and that corresponds to each training data pair.

Then, a target loss function may be obtained, and the estimated driving behavior and the real driving behavior that are of the first vehicle and that correspond to each training data pair are input into the target loss function, to obtain the target loss. The target loss indicates a difference between the estimated driving behavior and the real driving behavior of the first vehicle.

Then, the model parameter of the submodel may be updated based on the target loss, and the submodel with an updated parameter is continuously trained by using a next batch of training data until the model training condition is met (for example, the target loss reaches convergence), to obtain a trained submodel. Similarly, a same training process may also be performed on other submodels. Therefore, M trained submodels may be obtained. This is equivalent to obtaining a trained neural network model (that is, the foregoing target model).

It should be noted that the next batch of training data is usually updated based on a current batch of training data. For example, for a training data pair in the current batch of training data, if an estimated driving behavior corresponding to the training data pair is an unsafe driving behavior (that is, if the first vehicle uses the estimated driving behavior, the first vehicle may collide with the second vehicle), the training data pair may be replaced with a new training data pair; or if the estimated driving behavior corresponding to the training data pair is a safe driving behavior, the training data pair may be retained. In this way, the current batch of training data may be updated to the next batch of training data.

It should be understood that the foregoing third driving data is all data (including the current batch of training data, the next batch of training data, and the like) used to train the first to-be-trained model in this embodiment.

305: Learn the training data by using the second to-be-trained model, to obtain the trained anomaly detection model.

After the trained neural network model is obtained, all data used to train the first to-be-trained model may be input into the second to-be-trained model. The second to-be-trained model may effectively learn the data, consider the data as viewed data, and obtain a value range through division based on the data. After the value range is divided, the model completes training. This is equivalent to obtaining the trained anomaly detection model.

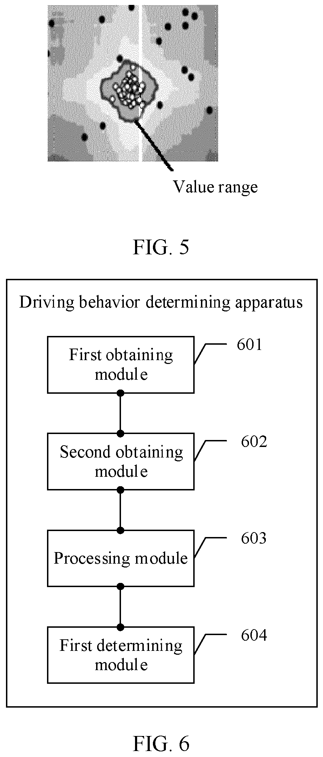

It should be noted that a value range divided by the anomaly detection model is a value range surrounding all data used for training the first to-be-trained model. As shown in FIG. 5 (FIG. 5 is a schematic diagram of the value range according to an embodiment of this application), points within the value range are all data used for training the first to-be-trained model, and may be considered as data (that is, normal data, white points in FIG. 5) viewed by the anomaly detection model, a point outside the value range is data that is not viewed by the anomaly detection model (that is, abnormal data, for example, a black point in FIG. 5).

It should be understood that, in this embodiment, training of the second to-be-trained model after training of the first to-be-trained model is completed is described as an example, and does not constitute a limitation on a sequence of training the two models. For example, training of the second to-be-trained model and training of the first to-be-trained model may be performed in parallel. To be specific, after the first to-be-trained model and the second to-be-trained model are trained by using a batch of training data, the first to-be-trained model and the second to-be-trained model are trained by using the next batch of training data until training of the two models is completed.

Based on this embodiment of this application, the trained neural network model may be obtained. The trained neural network model learns human driving experience, and therefore may be used to estimate a driving behavior of a vehicle based on driving data of the vehicle, so that a driving behavior used by the vehicle in an autonomous driving process is human-like to some extent.

Further, according to this embodiment of this application, the trained anomaly detection model may be further obtained. The vehicle may determine, by using the anomaly detection model, whether the driving data is abnormal. If the driving data is abnormal data, the vehicle does not continue to process the driving data by using the neural network model, to avoid that the neural network model incorrectly generalizes the abnormal data.

The foregoing describes in detail the model training method provided in embodiments of this application. The following describes a driving behavior determining apparatus provided in embodiments of this application. FIG. 6 is a schematic diagram of a structure of the driving behavior determining apparatus according to an embodiment of this application. As shown in FIG. 6, the apparatus is deployed in a first vehicle, and the apparatus includes:
a first obtaining module 601, configured to obtain first driving data of the first vehicle and second driving data of a second vehicle;
a second obtaining module 602, configured to obtain, based on the first driving data and the second driving data, a driving behavior set in which the first vehicle has no risk of collision with the second vehicle;
a processing module 603, configured to process the first driving data and the second driving data by using a target model, to obtain a predicted driving behavior of the first vehicle; and
a first determining module 604, configured to: if the driving behavior set includes the predicted driving behavior, determine the predicted driving behavior as a driving behavior to be performed by the first vehicle.

In a possible implementation, the apparatus further includes: a second determining module, configured to: if the driving behavior set does not include the predicted driving behavior, determine, from the driving behavior set, the driving behavior to be performed by the first vehicle.

In a possible implementation, the target model is obtained through training based on third driving data, and the processing module 603 is configured to: if the first driving data and the second driving data fall within a preset value range, process the first driving data and the second driving data by using the target model, to obtain the predicted driving behavior of the first vehicle. The preset value range is constructed based on the third driving data.

In a possible implementation, the apparatus further includes: a third determining module, configured to: if the first driving data and/or the second driving data fall/falls outside the preset value range, determine, from the driving behavior set, the driving behavior to be performed by the first vehicle.

In a possible implementation, the processing module 603 is configured to: process the first driving data and the second driving data by using the target model, to obtain distribution probabilities of a plurality of candidate driving behaviors; and if a distribution probability of a target driving behavior in the plurality of candidate driving behaviors meets a preset condition, determine the target driving behavior as the predicted driving behavior of the first vehicle. The distribution probability of the target driving behavior is the largest in the distribution probabilities of the plurality of candidate driving behaviors.

In a possible implementation, the apparatus further includes: a fourth determining module, configured to: if the distribution probability of the target driving behavior does not meet the condition, determine, from the driving behavior set, the driving behavior to be performed by the first vehicle.

In a possible implementation, the condition is that the distribution probability of the target driving behavior is greater than or equal to a preset first threshold, or a variance determined based on the distribution probability of the target driving behavior is less than or equal to a preset second threshold.

In a possible implementation, the driving behavior set includes at least one of the plurality of candidate driving behaviors.

In a possible implementation, the second obtaining module 602 is further configured to obtain, based on the first driving data and the second driving data, a score of the at least one candidate driving behavior included in the driving behavior set; and the second determining module, the third determining module, or the fourth determining module is configured to determine, from the driving behavior set, a candidate driving behavior with a highest score as the driving behavior to be performed by the first vehicle.

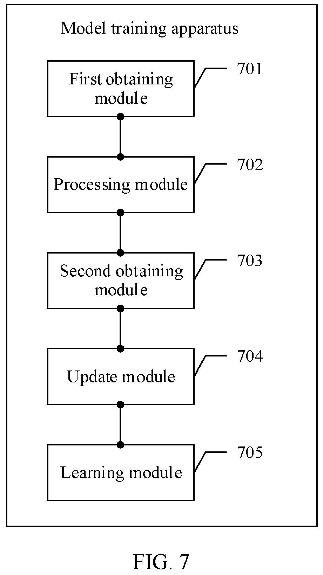

The foregoing describes in detail the model training method provided in embodiments of this application. The following describes a driving behavior determining apparatus provided in embodiments of this application. FIG. 7 is a schematic diagram of a structure of the model training apparatus according to an embodiment of this application. As shown in FIG. 7, the apparatus includes:
a first obtaining module 701, configured to obtain training data, where the training data includes human driving data of a first vehicle and human driving data of a second vehicle;
a processing module 702, configured to process the training data by using a first to-be-trained model, to obtain an estimated driving behavior of the first vehicle;
a second obtaining module 703, configured to obtain a target loss based on a real driving behavior of the first vehicle and an estimated driving behavior of the first vehicle, where the target loss indicates a difference between the real driving behavior of the first vehicle and the estimated driving behavior of the first vehicle;
an update module 704, configured to update a model parameter of the first to-be-trained model based on the target loss until a model training condition is met, to obtain a trained neural network model; and
a learning module 705, configured to learn the training data by using a second to-be-trained model, to obtain a trained anomaly detection model.

It should be noted that content such as information exchange between the modules/units of the apparatus and the execution processes thereof is based on the same idea as that of the method embodiments of this application, and produces the same technical effects as that of the method embodiments of this application. For specific content, refer to the foregoing descriptions in the method embodiments of this application. Details are not described herein again.

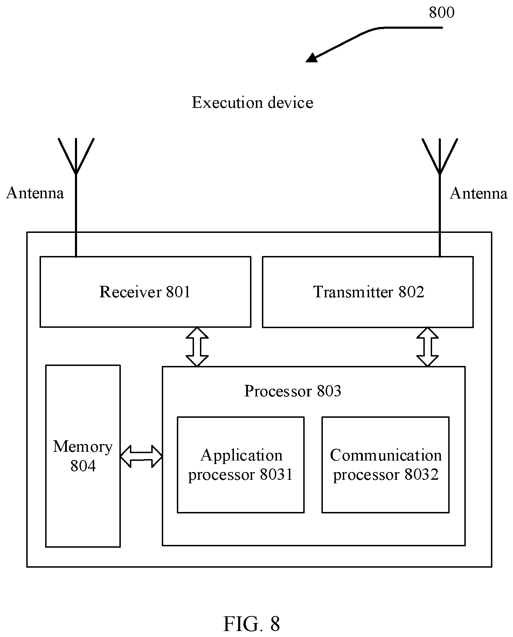

An embodiment of this application further relates to an execution device. FIG. 8 is a schematic diagram of a structure of the execution device according to an embodiment of this application. As shown in FIG. 8, the execution device 800 may be deployed in a first vehicle, for example, a driving system of the first vehicle. This is not limited herein. The driving behavior determining apparatus described in the embodiment corresponding to FIG. 6 may be deployed on the execution device 800, to implement the driving behavior determining function in the embodiment corresponding to FIG. 2. Specifically, the execution device 800 includes a receiver 801, a transmitter 802, a processor 803, and a memory 804 (there may be one or more processors 803 in the execution device 800, and one processor is used as an example in FIG. 8). The processor 803 may include an application processor 8031 and a communication processor 8032. In some embodiments of this application, the receiver 801, the transmitter 802, the processor 803, and the memory 804 may be connected by using a bus or in another manner.

The memory 804 may include a read-only memory and a random access memory, and provide instructions and data to the processor 803. A part of the memory 804 may further include a non-volatile random access memory (NVRAM). The memory 804 stores a processor and operation instructions, an executable module or a data structure, or a subset thereof, or an extended set thereof. The operation instructions may include various operation instructions used to implement various operations.

The processor 803 controls an operation of the execution device. In specific application, components of the execution device are coupled by using a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 803, or may be implemented by the processor 803. The processor 803 may be an integrated circuit chip and has a signal processing capability. In an implementation process, the steps in the foregoing methods may be completed by using a hardware integrated logic circuit in the processor 803, or by using instructions in a form of software. The processor 803 may be a general-purpose processor, a digital signal processor (DSP), a microprocessor, or a microcontroller. The processor 803 may further include an application-specific integrated circuit (ASIC), a field-programmable gate array (FPGA) or another programmable logic device, a discrete gate, or a transistor logic device, or a discrete hardware component. The processor 803 may implement or perform the methods, the steps, and the logical block diagrams disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 804, and the processor 803 reads information in the memory 804 and completes the steps of the foregoing methods in combination with hardware of the processor 803.

The receiver 801 may be configured to receive input digit or character information, and generate signal input related to a related setting and function control of the execution device. The transmitter 802 may be configured to output digital or character information through a first interface. The transmitter 802 may be further configured to send instructions to a disk group through the first interface, to modify data in the disk group. The transmitter 802 may further include a display device such as a display.

In this embodiment of this application, in one case, the processor 803 is configured to implement the steps in the embodiment corresponding to FIG. 2.

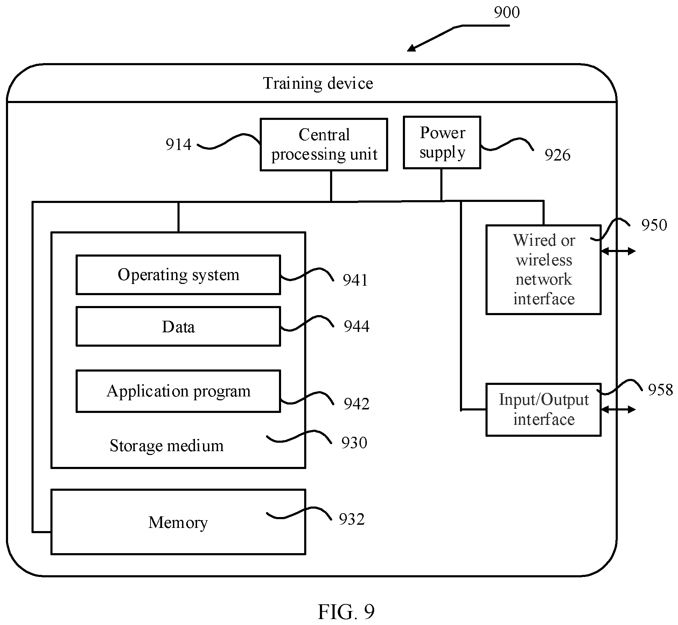

An embodiment of this application further relates to a training device. FIG. 9 is a schematic diagram of a structure of the training device according to an embodiment of this application. As shown in FIG. 9, the training device 900 may be deployed in the first vehicle or outside the first vehicle (for example, implemented by one or more servers). The training device 900 may vary greatly due to different configurations or performance, and may include one or more central processing units (CPUs) 914 (for example, one or more processors) and a memory 932, and one or more storage media 930 (for example, one or more mass storage devices) that store an application program 942 or data 944. The memory 932 and the storage medium 930 may be transient storage or persistent storage. A program stored in the storage medium 930 may include one or more modules (not shown in the figure), and each module may include a series of instruction operations for the training device. Further, the central processing unit 914 may be configured to communicate with the storage medium 930, and perform, on the training device 900, the series of instruction operations in the storage medium 930.

The training device 900 may further include one or more power supplies 926, one or more wired or wireless network interfaces 950, one or more input/output interfaces 958; or one or more operating systems 941, such as Windows ServerTM, Mac OS XTM, UnixTM, LinuxTM, and FreeBSDTM.

Specifically, the training device may perform the model training method in the embodiment corresponding to FIG. 3.

An embodiment of this application further relates to a computer storage medium. The computer-readable storage medium stores a program for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may specifically be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (ROM), another type of static storage device that can store static information and instructions, or a random access memory (RAM).

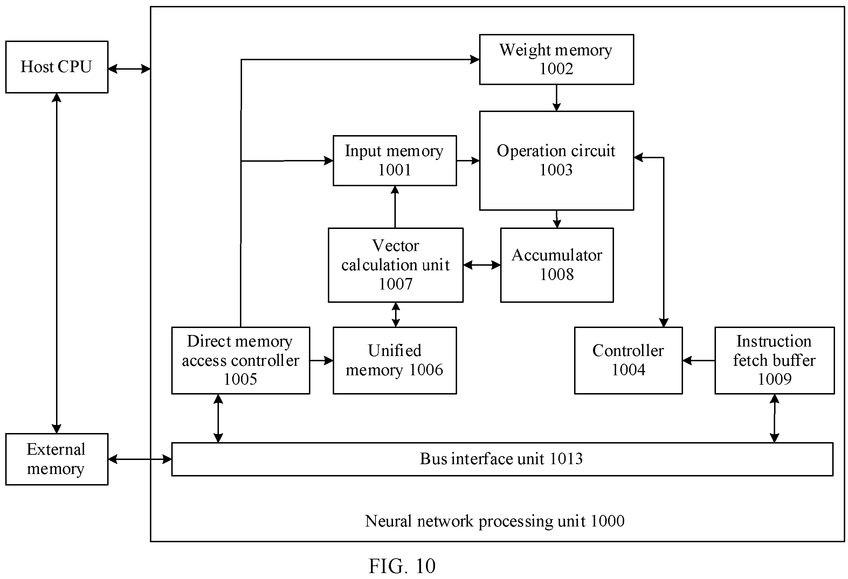

For details, refer to FIG. 10. FIG. 10 is a schematic diagram of a structure of a chip according to an embodiment of this application. The chip may be represented as a neural network processing unit NPU 1000. The NPU 1000 is mounted to a host CPU (Host CPU) as a coprocessor, and the host CPU allocates a task. A core part of the NPU is an operation circuit 1003. The operation circuit 1003 is controlled by a controller 1004 to extract matrix data in a memory and perform a multiplication operation.

In some implementations, the operation circuit 1003 includes a plurality of process engines (PE) inside. In some implementations, the operation circuit 1003 is a two-dimensional systolic array. The operation circuit 1003 may alternatively be a one-dimensional systolic array or another electronic circuit capable of performing mathematical operations such as multiplication and addition. In some implementations, the operation circuit 1003 is a general-purpose matrix processor.

For example, it is assumed that there is an input matrix A, a weight matrix B, and an output matrix C. The operation circuit fetches data corresponding to the matrix B from a weight memory 1002, and buffers the data on each PE in the operation circuit. The operation circuit obtains data of the matrix A from the input memory 1001 to perform a matrix operation on the matrix B, and stores an obtained partial result or an obtained final result of the matrix into an accumulator (accumulator) 1008.

A unified memory 1006 is configured to store input data and output data. Weight data is directly transferred to the weight memory 1002 by using a direct memory access controller DMAC (DMAC) 1005. The input data is also transferred to the unified memory 1006 by using the DMAC.

ABIU is a bus interface unit, namely, a bus interface unit 1013, and is configured to perform interaction between an AXI bus and each of the DMAC and an instruction fetch buffer (IFB) 1009.

The bus interface unit (BIU) 1013 is used by the instruction fetch buffer 1009 to obtain instructions from an external memory, and is further used by the direct memory access controller 1005 to obtain original data of the input matrix A or the weight matrix B from the external memory.

The DMAC is mainly configured to transfer input data in the external memory DDR to the unified memory 1006, transfer weight data to the weight memory 1002, or transfer input data to the input memory 1001.

A vector calculation unit 1007 includes a plurality of operation processing units. If required, further processing is performed on an output of the operation circuit 1003, such as vector multiplication, vector addition, an exponential operation, a logarithmic operation, or value comparison. The vector calculation unit 1007 is mainly configured to perform network calculation at a non-convolutional/fully connected layer in a neural network, for example, batch normalization (batch normalization), pixel-level summation, and upsampling on a predicted label plane.

In some implementations, the vector calculation unit 1007 can store a processed output vector in the unified memory 1006. For example, the vector calculation unit 1007 may apply a linear function or a non-linear function to the output of the operation circuit 1003, for example, perform linear interpolation on the predicted label plane extracted at a convolutional layer. For another example, the linear function or the non-linear function is applied to a vector of an accumulated value to generate an activation value. In some implementations, the vector calculation unit 1007 generates a normalized value, a pixel-level summation value, or both. In some implementations, the processed output vector can be used as an activated input to the operation circuit 1003, for example, the processed output vector can be used at a subsequent layer of the neural network.

The instruction fetch buffer (instruction fetch buffer) 1009 connected to the controller 1004 is configured to store instructions used by the controller 1004.

The unified memory 1006, the input memory 1001, the weight memory 1002, and the instruction fetch buffer 1009 are all on-chip memories. The external memory is private for a hardware architecture of the NPU.

The processor mentioned anywhere above may be a general-purpose central processing unit, a microprocessor, an ASIC, or one or more integrated circuits configured to control program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

## Claims

1. A driving behavior determining method, wherein the method comprises:
obtaining (101) first driving data of a first vehicle and second driving data of a second vehicle;
obtaining (102), based on the first driving data and the second driving data, a driving behavior set in which the first vehicle has no risk of collision with the second vehicle;
processing (106) the first driving data and the second driving data by using a target model, to obtain a predicted driving behavior of the first vehicle; and
if the driving behavior set comprises the predicted driving behavior, determining (110) the predicted driving behavior as a driving behavior to be performed by the first vehicle.

2. The method according to claim 1, wherein the method further comprises:
if the driving behavior set does not comprise the predicted driving behavior, determining (111), from the driving behavior set, the driving behavior to be performed by the first vehicle.

3. The method according to claim 1 or 2, wherein the target model is obtained through training based on third driving data, and the processing the first driving data and the second driving data by using a target model, to obtain a predicted driving behavior of the first vehicle comprises:
if the first driving data and the second driving data fall within a preset value range (105), processing the first driving data and the second driving data by using the target model, to obtain the predicted driving behavior of the first vehicle, wherein the preset value range is constructed based on the third driving data.

4. The method according to claim 3, wherein the method further comprises:
if the first driving data and/or the second driving data fall/falls outside the preset value range (104), determining, from the driving behavior set, the driving behavior to be performed by the first vehicle.

5. The method according to any one of claims 1 to 4, wherein the processing the first driving data and the second driving data by using a target model, to obtain a predicted driving behavior of the first vehicle comprises:
processing (105) the first driving data and the second driving data by using the target model, to obtain distribution probabilities of a plurality of candidate driving behaviors; and
if a distribution probability of a target driving behavior in the plurality of candidate driving behaviors meets a preset condition (108), determining the target driving behavior as the predicted driving behavior of the first vehicle, wherein the distribution probability of the target driving behavior is the largest in the distribution probabilities of the plurality of candidate driving behaviors.

6. The method according to claim 5, wherein the method further comprises:
if the distribution probability of the target driving behavior does not meet the condition (107), determining, from the driving behavior set, the driving behavior to be performed by the first vehicle.

7. The method according to claim 5 or 6, wherein the condition is that the distribution probability of the target driving behavior is greater than or equal to a preset first threshold, or a variance determined based on the distribution probability of the target driving behavior is less than or equal to a preset second threshold.

8. The method according to any one of claims 5 to 7, wherein the driving behavior set comprises at least one of the plurality of candidate driving behaviors.

9. The method according to claim 8, wherein the method further comprises:
obtaining, based on the first driving data and the second driving data, a score of the at least one candidate driving behavior comprised in the driving behavior set; and
the determining, from the driving behavior set, the driving behavior to be performed by the first vehicle comprises:
determining, from the driving behavior set, a candidate driving behavior with a highest score as the driving behavior to be performed by the first vehicle.

10. A driving behavior determining apparatus, wherein the apparatus comprises:
a first obtaining module (601), configured to obtain first driving data of a first vehicle and second driving data of a second vehicle;
a second obtaining module (602), configured to obtain, based on the first driving data and the second driving data, a driving behavior set in which the first vehicle has no risk of collision with the second vehicle;
a processing module (603), configured to process the first driving data and the second driving data by using a target model, to obtain a predicted driving behavior of the first vehicle; and
a first determining module (604), configured to: if the driving behavior set comprises the predicted driving behavior, determine the predicted driving behavior as a driving behavior to be performed by the first vehicle.

11. The apparatus according to claim 10, wherein the apparatus further comprises:
a second determining module, configured to: if the driving behavior set does not comprise the predicted driving behavior, determine, from the driving behavior set, the driving behavior to be performed by the first vehicle.

12. The apparatus according to claim 10 or 11, wherein the target model is obtained through training based on third driving data, and the processing module is configured to: if the first driving data and the second driving data fall within a preset value range, process the first driving data and the second driving data by using the target model, to obtain the predicted driving behavior of the first vehicle, wherein the preset value range is constructed based on the third driving data.

13. A computer storage medium, wherein the computer storage medium stores one or more instructions, and when the instructions are executed by one or more computers, the one or more computers are enabled to perform the method according to any one of claims 1 to 9.

14. A computer program product, wherein the computer program product stores instructions, and when the instructions are executed by a computer, the computer is enabled to perform the method according to any one of claims 1 to 9.

## Patentansprüche

1. Verfahren zur Bestimmung des Fahrverhaltens, wobei das Verfahren Folgendes umfasst:
Erlangen (101) von ersten Fahrdaten eines ersten Fahrzeugs und von zweiten Fahrdaten eines zweiten Fahrzeugs;
Erlangen (102), basierend auf den ersten Fahrdaten und den zweiten Fahrdaten, eines Satzes von Fahrverhalten, bei dem für das erste Fahrzeug kein Kollisionsrisiko mit dem zweiten Fahrzeug besteht;
Verarbeiten (106) der ersten Fahrdaten und der zweiten Fahrdaten unter Verwendung eines Zielmodells, um ein vorhergesagtes Fahrverhalten des ersten Fahrzeugs zu erlangen; und
wenn der Satz von Fahrverhalten das vorhergesagte Fahrverhalten umfasst, Bestimmen (110) des vorhergesagten Fahrverhaltens als ein durch das erste Fahrzeug durchzuführendes Fahrverhalten.

2. Verfahren nach Anspruch 1, wobei das Verfahren ferner Folgendes umfasst:
wenn der Satz von Fahrverhalten das vorhergesagte Fahrverhalten nicht umfasst, Bestimmen (111), aus dem Satz von Fahrverhalten, des durch das erste Fahrzeug durchzuführenden Fahrverhaltens.

3. Verfahren nach Anspruch 1 oder 2, wobei das Zielmodell durch Trainieren basierend auf dritten Fahrdaten erlangt wird und wobei das Verarbeiten der ersten Fahrdaten und der zweiten Fahrdaten unter Verwendung eines Zielmodells, um ein vorhergesagtes Fahrverhalten des ersten Fahrzeugs zu erlangen, Folgendes umfasst:
wenn die ersten Fahrdaten und die zweiten Fahrdaten innerhalb eines voreingestellten Wertebereichs (105) liegen, Verarbeiten der ersten Fahrdaten und der zweiten Fahrdaten unter Verwendung des Zielmodells, um das vorhergesagte Fahrverhalten des ersten Fahrzeugs zu erlangen, wobei der voreingestellte Wertebereich basierend auf den dritten Fahrdaten erstellt wird.

4. Verfahren nach Anspruch 3, wobei das Verfahren ferner Folgendes umfasst:
wenn die ersten Fahrdaten und/oder die zweiten Fahrdaten außerhalb des voreingestellten Wertebereichs (104) liegen, Bestimmen, aus dem Satz von Fahrverhalten, des durch das erste Fahrzeug durchzuführenden Fahrverhaltens.

5. Verfahren nach einem der Ansprüche 1 bis 4, wobei das Verarbeiten der ersten Fahrdaten und der zweiten Fahrdaten unter Verwendung eines Zielmodells, um ein vorhergesagtes Fahrverhalten des ersten Fahrzeugs zu erlangen, Folgendes umfasst:
Verarbeiten (105) der ersten Fahrdaten und der zweiten Fahrdaten unter Verwendung des Zielmodells, um Verteilungswahrscheinlichkeiten einer Vielzahl von Kandidatenfahrverhalten zu erlangen; und
wenn eine Verteilungswahrscheinlichkeit eines Zielfahrverhaltens in der Vielzahl von Kandidatenfahrverhalten eine voreingestellte Bedingung (108) erfüllt, Bestimmen des Zielfahrverhaltens als das vorhergesagte Fahrverhalten des ersten Fahrzeugs, wobei die Verteilungswahrscheinlichkeit des Zielfahrverhaltens die größte in den Verteilungswahrscheinlichkeiten der Vielzahl von Kandidatenfahrverhalten ist.

6. Verfahren nach Anspruch 5, wobei das Verfahren ferner Folgendes umfasst:
wenn die Verteilungswahrscheinlichkeit des Zielfahrverhaltens die Bedingung (107) nicht erfüllt, Bestimmen, aus dem Satz von Fahrverhalten, des durch das erste Fahrzeug durchzuführenden Fahrverhaltens.

7. Verfahren nach Anspruch 5 oder 6, wobei die Bedingung darin besteht, dass die Verteilungswahrscheinlichkeit des Zielfahrverhaltens größer als oder gleich einem voreingestellten ersten Schwellenwert ist oder eine basierend auf der Verteilungswahrscheinlichkeit des Zielfahrverhaltens bestimmte Varianz kleiner als oder gleich einem voreingestellten zweiten Schwellenwert ist.

8. Verfahren nach einem der Ansprüche 5 bis 7, wobei der Satz von Fahrverhalten mindestens eines der Vielzahl von Kandidatenfahrverhalten umfasst.

9. Verfahren nach Anspruch 8, wobei das Verfahren ferner Folgendes umfasst:
Erlangen, basierend auf den ersten Fahrdaten und den zweiten Fahrdaten, einer Bewertung des mindestens einen in dem Satz von Fahrverhalten umfassten Kandidatenfahrverhaltens; und
das Bestimmen, aus dem Satz von Fahrverhalten, des durch das erste Fahrzeug durchzuführenden Fahrverhaltens Folgendes umfasst:
Bestimmen, aus dem Satz von Fahrverhalten, eines Kandidatenfahrverhaltens mit einer höchsten Bewertung als das durch das erste Fahrzeug durchzuführende Fahrverhalten.

10. Einrichtung zur Bestimmung des Fahrverhaltens, wobei die Einrichtung Folgendes umfasst:
ein erstes Erlangungsmodul (601), das dazu konfiguriert ist, erste Fahrdaten eines ersten Fahrzeugs und zweite Fahrdaten eines zweiten Fahrzeugs zu erlangen;
ein zweites Erlangungsmodul (602), das dazu konfiguriert ist, basierend auf den ersten Fahrdaten und den zweiten Fahrdaten einen Satz von Fahrverhalten zu erlangen, bei dem für das erste Fahrzeug kein Kollisionsrisiko mit dem zweiten Fahrzeug besteht;
ein Verarbeitungsmodul (603), das dazu konfiguriert ist, die ersten Fahrdaten und die zweiten Fahrdaten unter Verwendung eines Zielmodells zu verarbeiten, um ein vorhergesagtes Fahrverhalten des ersten Fahrzeugs zu erlangen; und
ein erstes Bestimmungsmodul (604), das zu Folgendem konfiguriert ist: wenn der Satz von Fahrverhalten das vorhergesagte Fahrverhalten umfasst, Bestimmen des vorhergesagten Fahrverhaltens als ein durch das erste Fahrzeug durchzuführendes Fahrverhalten.

11. Einrichtung nach Anspruch 10, wobei die Einrichtung ferner Folgendes umfasst:
ein zweites Bestimmungsmodul, das zu Folgendem konfiguriert ist: wenn der Satz von Fahrverhalten das vorhergesagte Fahrverhalten nicht umfasst, Bestimmen, aus dem Satz von Fahrverhalten, des durch das erste Fahrzeug durchzuführenden Fahrverhaltens.

12. Einrichtung nach Anspruch 10 oder 11, wobei das Zielmodell durch Trainieren basierend auf dritten Fahrdaten erlangt wird und das Verarbeitungsmodul zu Folgendem konfiguriert ist: wenn die ersten Fahrdaten und die zweiten Fahrdaten innerhalb eines voreingestellten Wertebereichs liegen, Verarbeiten der ersten Fahrdaten und der zweiten Fahrdaten unter Verwendung des Zielmodells, um das vorhergesagte Fahrverhalten des ersten Fahrzeugs zu erlangen, wobei der voreingestellte Wertebereich basierend auf den dritten Fahrdaten erstellt wird.

13. Computerspeichermedium, wobei das Computerspeichermedium eine oder mehrere Anweisungen speichert und die Anweisungen bei Ausführung durch einen oder mehrere Computer den einen oder die mehreren Computer in die Lage versetzen, das Verfahren nach einem der Ansprüche 1 bis 9 durchzuführen.

14. Computerprogrammprodukt, wobei das Computerprogrammprodukt Anweisungen speichert und die Anweisungen bei Ausführung durch einen Computer den Computer in die Lage versetzen, das Verfahren nach einem der Ansprüche 1 bis 9 durchzuführen.

## Revendications

1. Procédé de détermination de comportement de conduite, dans lequel le procédé comprend :
l'obtention (101) de premières données de conduite d'un premier véhicule et de deuxièmes données de conduite d'un second véhicule ;
l'obtention (102), sur la base des premières données de conduite et des deuxièmes données de conduite, d'un ensemble de comportements de conduite dans lequel le premier véhicule ne présente aucun risque de collision avec le second véhicule ;
le traitement (106) des premières données de conduite et des deuxièmes données de conduite en utilisant un modèle cible, pour obtenir un comportement de conduite prédit du premier véhicule ; et
si l'ensemble de comportements de conduite comprend le comportement de conduite prédit, la détermination (110) du comportement de conduite prédit comme un comportement de conduite à adopter par le premier véhicule.

2. Procédé selon la revendication 1, dans lequel le procédé comprend également :
si l'ensemble de comportements de conduite ne comprend pas le comportement de conduite prédit, la détermination (111), à partir de l'ensemble de comportements de conduite, du comportement de conduite à adopter par le premier véhicule.

3. Procédé selon la revendication 1 ou 2, dans lequel le modèle cible est obtenu par apprentissage sur la base des troisièmes données de conduite, et le traitement des premières données de conduit et des deuxièmes données de conduite en utilisant un modèle cible, pour obtenir un comportement de conduite prédit du premier véhicule, comprend :
si les premières données de conduite et les deuxièmes données de conduite se situent dans une plage de valeurs prédéfinie (105), le traitement des premières données de conduite et des deuxièmes données de conduite en utilisant le modèle cible, pour obtenir le comportement de conduite prédit du premier véhicule, dans lequel la plage de valeurs prédéfinie est construite sur la base des troisièmes données de conduite.

4. Procédé selon la revendication 3, dans lequel le procédé comprend également :
si les premières données de conduite et/ou les deuxièmes données de conduite se situent en dehors de la plage de valeurs prédéfinie (104), la détermination, à partir de l'ensemble de comportements de conduite, du comportement de conduite à adopter par le premier véhicule.

5. Procédé selon l'une quelconque des revendications 1 à 4, dans lequel le traitement des premières données de conduite et des deuxièmes données de conduite en utilisant un modèle cible, pour obtenir un comportement de conduite prédit du premier véhicule, comprend :
le traitement (105) des premières données de conduite et des deuxièmes données de conduite en utilisant le modèle cible, pour obtenir des probabilités de distribution d'une pluralité de comportements de conduite candidats ; et
si une probabilité de distribution d'un comportement de conduite cible dans la pluralité de comportements de conduite candidats satisfait une condition prédéfinie (108), la détermination du comportement de conduite cible comme le comportement de conduite prédit du premier véhicule, dans lequel la probabilité de distribution du comportement de conduite cible est la plus grande dans les probabilités de distribution de la pluralité de comportements de conduite candidats.

6. Procédé selon la revendication 5, dans lequel le procédé comprend également :
si la probabilité de distribution du comportement de conduite cible ne satisfait pas la condition (107), la détermination, à partir de l'ensemble de comportements de conduite, du comportement de conduite à adopter par le premier véhicule.

7. Procédé selon la revendication 5 ou 6, dans lequel la condition est que la probabilité de distribution du comportement de conduite cible est supérieure ou égale à un premier seuil prédéfini, ou qu'une variance déterminée sur la base de la probabilité de distribution du comportement de conduite cible est inférieure ou égale à un second seuil prédéfini.

8. Procédé selon l'une quelconque des revendications 5 à 7, dans lequel l'ensemble de comportements de conduite comprend au moins un de la pluralité des comportements de conduite candidats.

9. Procédé selon la revendication 8, dans lequel le procédé comprend également :
l'obtention, sur la base des premières données de conduite et des deuxièmes données de conduite, d'un score de l'au moins un comportement de conduite candidat compris dans l'ensemble de comportements de conduite ; et
la détermination, à partir de l'ensemble de comportements de conduite, du comportement de conduite à adopter par le premier véhicule comprend :
la détermination, à partir de l'ensemble de comportements de conduite, d'un comportement de conduite candidat avec un score le plus élevé comme comportement de conduite à adopter par le premier véhicule.

10. Appareil de détermination du comportement de conduite, dans lequel l'appareil comprend :
un premier module d'obtention (601), configuré pour obtenir de premières données de conduite d'un premier véhicule et de deuxièmes données de conduite d'un second véhicule ;
un second module d'obtention (602), configuré pour obtenir, sur la base des premières données de conduite et des deuxièmes données de conduite, un ensemble de comportements de conduite dans lequel le premier véhicule ne présente aucun risque de collision avec le second véhicule ;
un module de traitement (603), configuré pour traiter les premières données de conduite et les deuxièmes données de conduite en utilisant un modèle cible, pour obtenir un comportement de conduite prédit du premier véhicule ; et
un premier module de détermination (604), configuré pour : si l'ensemble de comportements de conduite comprend le comportement de conduite prédit, déterminer le comportement de conduite prédit comme comportement de conduite à adopter par le premier véhicule.

11. Appareil selon la revendication 10, dans lequel l'appareil comprend également :
un second module de détermination, configuré pour : si l'ensemble de comportements de conduite ne comprend pas le comportement de conduite prédit, déterminer, à partir de l'ensemble de comportements de conduite, le comportement de conduite à adopter par le premier véhicule.

12. Appareil selon la revendication 10 ou 11, dans lequel le modèle cible est obtenu par apprentissage sur la base de troisièmes données de conduite, et le module de traitement est configuré pour : si les premières données de conduite et les deuxièmes données de conduite se situent dans une plage de valeurs prédéfinie, traiter les premières données de conduite et les deuxièmes données de conduite en utilisant le modèle cible, pour obtenir le comportement de conduite prédit du premier véhicule, dans lequel la plage de valeurs prédéfinie est construite sur la base des troisièmes données de conduite.

13. Support de stockage informatique, dans lequel le support de stockage informatique stocke une ou plusieurs instructions, et lorsque les instructions sont exécutées par un ou plusieurs ordinateurs, les un ou plusieurs ordinateurs sont activés pour réaliser le procédé selon l'une quelconque des revendications 1 à 9.

14. Produit de programme informatique dans lequel le produit de programme informatique stocke des instructions, et lorsque les instructions sont exécutées par un ordinateur, l'ordinateur est activé pour réaliser le procédé selon l'une quelconque des revendications 1 à 9.
